# FASCICULE DE BREVET EUROPEEN

(11) **EP 0 628 402 B1**
(45) Date de publication et mention de la délivrance du brevet: **11.11.1998**
(21) Numéro de dépôt: 94450004.0
(22) Date de dépôt: 10.06.1994
(51) Int. Cl.: B29C 70/08, B29C 53/82, B29C 33/48

(54) **Procédé de réalisation d'objets creux en matériau composite par bobinage-dépose au contact sur un mandrin expansible et objets ainsi obtenus**
Verfahren zur Herstellung von Hohlkörper aus Verbundwerkstoff durch Kontaktwicklen auf einer ausdehnbaren Form und dadurch hergestellte Körper
Method for manufacturing hollow objects from composite material by contact winding on an expandable mandrel and objects obtained by such a method

(30) Priorité: 14.06.1993 FR 9307432
(43) Date de publication de la demande: 14.12.1994
(73) Titulaire: AEROSPATIALE Société Nationale Industrielle, 75781 Paris Cédex 16 (FR)
(72) Inventeur: Darrieux, Jean-Louis, F-33160 Saint Medard en Jalles (FR); Canfranc, Hugues, F-33160 Saint Aubin de Medoc (FR); Picosson, Christian, F-33460 Macau (FR)
(74) Mandataire: Thébault, Jean-Louis

(56) Documents cités:
- EP-A- 0 369 395
- DE-A- 3 408 769
- GB-A- 544 547
- GB-A- 2 040 790

## Description

La présente invention a trait à la réalisation d'objets creux, munis d'au moins un orifice d'accès à l'intérieur, par bobinage-dépose au contact de fibres pré-imprégnées sur un mandrin expansible.

Par GB-A-2.040.790 on sait réaliser des pales d'hélicoptère à partir de pièces de tissus de verre pré-imprégnés entourant chacune complètement un mandrin expansible et dont les bords se chevauchent substantiellement.

Par ailleurs, on sait déjà réaliser des pièces creuses, par exemple des bielles, constituées de fibres pré-imprégnées mises en place sur un mandrin expansible qui est ensuite expansé afin de plaquer les fibres contre la paroi interne d'un conformateur enveloppant le mandrin, cependant que l'on procède à la polymérisation de la résine enrobant les fibres.

Le brevet français FR 2 550 123 décrit une telle technique qui, toutefois, ne vise que la réalisation de bielles à fibres unidirectionnelles et plus précisément à fibres disposées dans l'axe de la bielle. En effet, du fait de l'expansion radiale du mandrin, après mise en place des fibres, il n'est pas possible de bobiner, en particulier circonférentiellement, des fibres sur le mandrin. L'élasticité trop faible des fibres, typiquement des fibres de carbone, jointe à la très grande résistance de celles-ci, empêcherait l'expansion du mandrin.

Le but de la présente invention est précisément de pallier aux inconvénients de cette technique en permettant la réalisation de pièces présentant des fibres bobinées ou déposées au contact de manière circonférentielle ou faisant avec l'axe du mandrin un angle pouvant s'étager entre 0° et 90°.

A cet effet, l'invention a pour objet un procédé de réalisation d'objets creux en matériau composite munis d'au moins un orifice d'accès, ledit procédé comprenant notamment les étapes de :
- bobinage et/ou dépose au contact de fibres pré-imprégnées sur un mandrin expansible, extractible, récupérable ou non, lesdites fibres étant formées de faisceaux de filaments continus agglomérés ou discontinus enchevêtrés et étant individuelles ou constituant l'un des éléments d'une trame tissée ;
- mise en expansion du mandrin à l'intérieur d'un conformateur approprié au moment de la polymérisation du matériau composite ;
ledit procédé étant caractérisé en ce que les fibres sont bobinées et/ou déposées au contact en formant avec l'axe du mandrin un angle approprié pouvant approcher ou atteindre 90° pour les fibres dites circonférentielles, au moins celles-ci formant sur le mandrin une ligne sinueuse ou formée d'éléments discontinus, chacun non supérieur à un tour complet du mandrin après expansion de ce dernier quand les fibres constituent l'un des éléments d'une trame tissée, de manière à permettre l'expansion circonférentiellement desdites fibres lors de l'expansion radiale du mandrin.

Par fibre on entend un faisceau de filaments continus agglomérés pouvant former un ruban, ou un faisceau de filaments discontinus enchevêtrés du type fil de laine.

La fibre est individuelle dans le cas du bobinage, bien que plusieurs fibres puissent être bobinées simultanément, mais peut, dans le cas de la dépose au contact, être individuelle ou constituant l'un des éléments (fil de trame ou fil de chaîne) d'une trame tissée.

Dans le cas d'une fibre individuelle, celle-ci peut être bobinée en lui donnant du mou, c'est-à-dire en sorte qu'elle forme circonférentiellement au mandrin, à l'endroit du contact avec ce dernier, une ligne sinueuse, par exemple une sinusoïde. Un tel bobinage est facile à mettre en oeuvre en contraignant la tête de bobinage à une excursion latérale périodique par rapport à la position normale de bobinage.

Les caractéristiques d'une telle ligne sinusoïdale, à savoir amplitude et pas, peuvent varier selon la nature de la fibre, le rayon de courbure de la surface sur laquelle est bobinée la fibre et la distance à l'axe de rotation du mandrin de la couche de fibres concernée.

Etant donné qu'au cours de l'expansion radiale du mandrin plaquant l'empilage de couches de fibres bobinées contre la paroi interne du conformateur, lesdites couches concentriques seront d'autant plus comprimées ou tassées qu'elles seront plus éloignées de la couche externe , le bobinage sinusoïdal s'effectuera avec, par exemple, une amplitude d'ondulation plus importante pour les couches les plus proches du mandrin.

Les caractéristiques des ondulations de la fibre selon le rang de la couche, varient donc avantageusement et ceci peut être aisément déterminé par le calcul et mis en oeuvre automatiquement par une commande pilotée par ordinateur de la tête de bobinage, de manière qu'en fin d'expansion du mandrin, toutes les fibres circonférentielles ou sensiblement circonférentielles, de toutes les couches, aient perdu toute leur sinuosité et retrouvé leur caractère purement hélicoïdal comme si elles avaient été bobinées normalement, sans ondulations.

Toujours dans le cas d'un fibre individuelle, celle-ci peut être mise en place, par bobinage ou dépose au contact, par tronçons circonférentiels bout à bout ou avec recouvrement partiel, chaque tronçon s'étendant sur un tour complet ou un peu plus, ou une fraction de tour.

Ainsi, lors de la dilatation du mandrin, les tronçons circonférentiels de fibres pourront suivre le mouvement avec un léger déplacement relatif dans le sens de la fibre.

S'il s'agit d'une fibre du type "fil de laine" ou mèche, la mise en place s'opère par un bobinage normal étant donné qu'à la dilatation du mandrin les filaments enchevêtrés constituant la fibre pourront jouer les uns par rapport aux autres dans le sens de la fibre.

Enfin, il s'agit de fibres constituant par exemple les fils de chaîne d'un tissu, on découpe des morceaux du tissu aux dimensions et formes appropriées, qui sont ensuite drapés sur le mandrin de manière que les fils de chaîne desdits morceaux soient disposés circonférentiellement au mandrin, étant entendu que, comme dans le cas précédent, les fils de chaîne d'un morceau s'étendent sur un tour complet du mandrin ou une fraction de tour, avec chevauchement ou placement bout à bout des morceaux de tissu.

Un tel procédé permet de réaliser des objets creux à fibres bobinées et/ou déposées au contact, comportant un profil extérieur présentant des caractéristiques dimensionnelles et d'état de surface susceptibles de répondre à des spécifications très strictes.

Le procédé de l'invention s'applique tout particulièrement, bien que non exclusivement, à la réalisation de bielles creuses à chapes présentant un état de surface remarquable et exempt de défauts de rugosité ou de fibres froissées.

Avantageusement, dans le cadre notamment de la fabrication de tels types de bielle, le mandrin expansible, extractible et récupérable ou non, est constitué par l'assemblage, démontable à la manière d'un puzzle en trois dimensions, de pièces dont les formes et dimensions sont déterminées en sorte de permettre, après polymérisation, l'extraction par enlèvement, selon une séquence pré-établie, des pièces par passage suivant l'un ou l'autre des orifices d'accès à l'intérieur de la bielle, à l'une ou l'autre de ses extrémités, un tel mandrin étant, à la manière connue, revêtu d'une vessie gonflable sur laquelle seront mises en place les fibres.

D'autres caractéristiques et avantages ressortiront de la description qui va suivre de modes de mise en oeuvre du procédé de l'invention, description donnée à titre d'exemple uniquement et en regard des dessins annexés sur lesquels :
- Figure 1 est une vue en perspective d'une bielle à chapes réalisable à l'aide du procédé de l'invention ;
- Figure 2 est une vue en coupe coaxiale verticale partielle d'un mandrin expansible extractible par démontage selon l'invention ;
- Figure 3 est une vue de gauche du dispositif de la figure 2 ;
- Figure 4 est une vue en coupe du mandrin perpendiculaire à son axe et suivant la ligne IV-IV de la figure 2 ;
- Figure 5 représente le mandrin de la figure 4 après bobinage et mise en place d'un moule conformateur ;
- Figure 6 représente le dispositif de la figure 5 dans la phase d'expansion du mandrin ;
- Figure 7 illustre le démoulage et le retrait du mandrin ;
- Figure 8 illustre schématiquement la manière de bobiner une fibre circonférentiellement sur le mandrin suivant une ligne sinueuse ;
- Figures 9a à 9f représentent différents schémas de mise en place de fibres circonférentielles conformément à l'invention, et
- Figures 10a et 10b illustrent le tassement des couches concentriques de fibre contre la paroi interne du conformateur suite à l'expansion du mandrin.

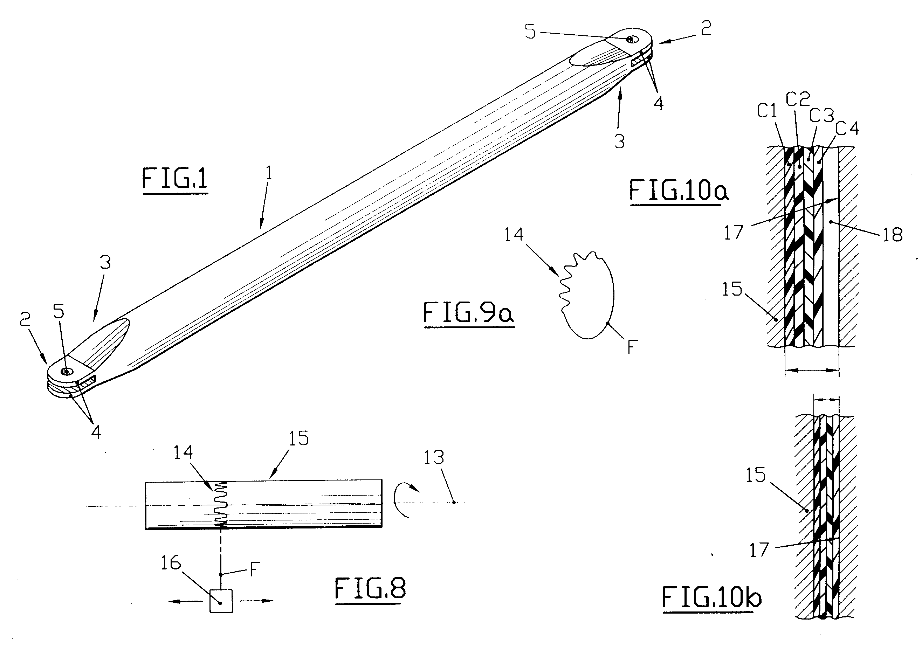

Sur la figure 1 on a représenté schématiquement en perspective un type de bielle réalisable avec le procédé de l'invention, constitué d'une partie courante creuse cylindrique 1, d'épaisseur de paroi constante, reliant deux têtes de bielle identiques en forme de chape 2 s'inscrivant dans un cylindre de diamètre légèrement inférieur à celui de la partie courante 1, les chapes étant reliées à cette dernière par une partie de raccordement 3 de section évolutive et d'épaisseur de paroi allant en s'épaississant de la partie courante 1 à la chape 2. Chaque chape 2 est constituée de deux joues parallèles 4 de section rectangulaire et percées de deux trous 5 en regard.

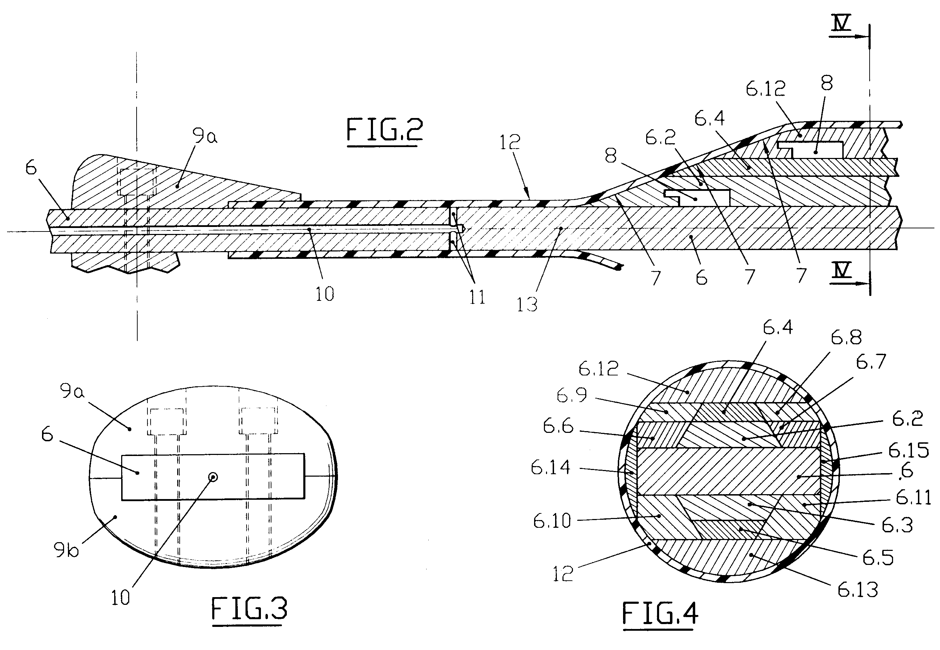

Les figures 2 à 4 représentent schématiquement un type de mandrin apte, selon le procédé de l'invention, à la réalisation de bielle du type de la figure 1, en matériau composite, monobloc

Ce mandrin est, conformément à l'invention, formé par un outillage récupérable composé d'un ensemble de pièces, par exemple métalliques, pouvant être assemblées et désassemblées à la manière d'un puzzle à trois dimensions, lesdites pièces étant dimensionnées et configurées, en sorte, d'une part, de constituer à l'état assemblée un volume correspondant sensiblement au volume intérieur de la bielle creuse de la figure 1 et, d'autre part, de permettre l'extraction de l'ensemble des pièces, après polymérisation de la résine des fibres mises en place sur le mandrin, cette extraction s'effectuant par l'une des extrémités ouvertes de la bielle entre les joues 4.

A cet effet, le mandrin comprend une barre centrale 6 de section rectangulaire constante.

Sur cette barre 6 sont rapportées à la périphérie (figure 4) diverses pièces configurées, dimensionnées et positionnées en sorte de définir, une fois toutes les pièces en place, un volume correspondant sensiblement à celui de la partie courante 1 de la bielle et des parties de raccordement 3.

La figure 4, qui est une coupe suivant la ligne IV-IV correspondant à la partie courante cylindrique 1 de la bielle, montre que le mandrin est formé, à hauteur de cette partie courante, d'une pièce centrale (barre 6) entourée de pièces de sections diverses (trapezoïdales, lenticulaires, ou autres) repérées 6₂ à 6₁₅, le chiffre en indice indiquant l'ordre suivant une séquence possible parmi d'autres, de retrait de la pièce considérée, la première retirée étant la barre 6.

Sur la figure 2 on n'a pas représenté les pièces placées sous la barre centrale 6.

Les pièces 6₂ à 6₁₅ ont une section constante sauf aux extrémités, à hauteur des parties de raccordement 3 de la bielle où lesdites pièces présentent des faces inclinées droites ou bombées (7) en alignement.

Certaines des pièces (6₂, 6₁₂) peuvent présenter sur leur face tournée vers la barre centrale 6 des creux 8 permettant l'engagement d'un crochet pour le décollement éventuel en vue de l'extraction de la pièce.

A hauteur des chapes 2 de la bielle, le mandrin est seulement constitué de la barre 6.

Aux deux extrémités de la barre 6 sont mises en place, à la manière connue, des coques 9a, 9b enveloppant la barre 6 et constituant des poires de retournement assurant la boucle de bobinage lors du retour de la tête de mise en place des fibres qui sont, par exemple, des fibres de carbone pré-imprégnées d'une résine appropriée.

La barre 6 est munie, à l'une de ses extrémité, d'un canal 10 d'amenée, à la manière connue, d'air sous pression, via des perçages 11, dans l'intervalle entre le mandrin et une vessie 12, par exemple un manchon tubulaire en silicone, enfilée et plaquée sur le mandrin entre les deux poires de retournement (9a,9b).

Pour mettre en forme le mandrin à partir des pièces d'assemblage (6,6₂ à 6₁₅) on peut par exemple placer le faisceau de pièces assemblé à l'horizontale sur deux chevalets, le faisceau étant maintenu par ceinturage à l'aide de liens élastiques, le temps d'enfiler la vessie 12 par dessus le mandrin. Les liens élastiques sont retirés au fur et à mesure de l'enfilement de la vessie qui joue alors le rôle de retenue élastique des liens.

Les coques 9a, 9b sont mises en place en dernier, par dessus les extrémités de la vessie 12.

Le mandrin de la figure 2 est prêt à être revêtu de fibres. A cet effet, il est placé, à la manière connue, entre deux poupées d'un système d'entraînement en rotation du mandrin autour de l'axe 13 de la barre 6.

Les fibres sont mises en place par bobinage et/ou dépose au contact, à la manière connue, comme décrit par exemple dans la demande de brevet français déposée au nom de la Demanderesse le 26 mai 1993 sous le N° 93 06613.

Toutefois, compte tenu de l'expansion radiale auquel seront soumises les fibres en place sur le mandrin et conformément à l'invention, notamment les fibres bobinées ou déposées circonférentiellement ou sensiblement circonféreniellement, cette mise en place s'effectue suivant un processus particulier grâce auquel lesdites fibres forment sur le mandrin une ligne sinueuse ou constituée d'éléments discontinus permettant la dilatation radiale de l'ensemble des couches concentriques de fibres.

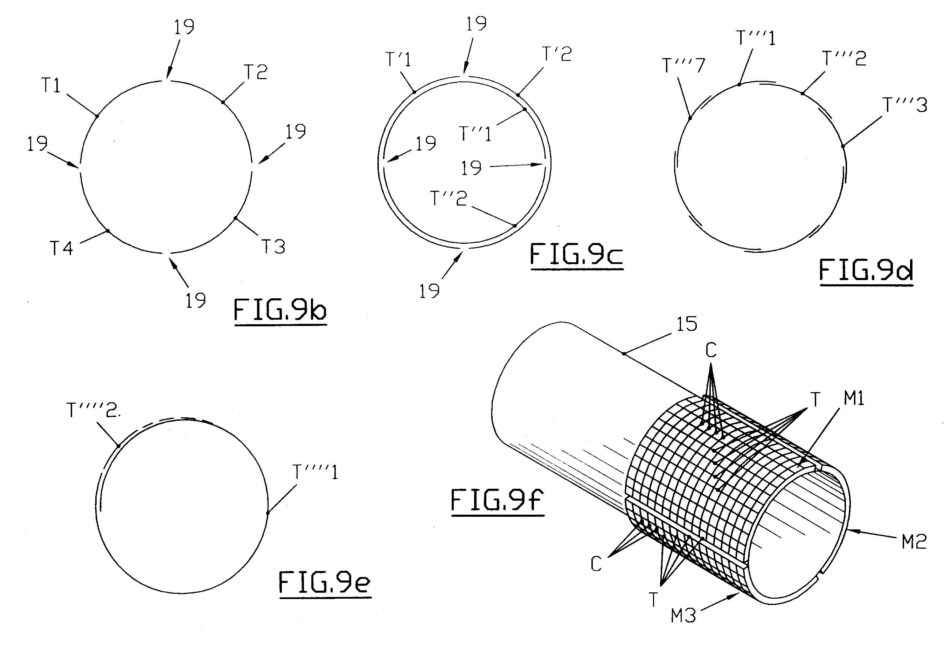

Suivant un premier mode de mise en oeuvre, dans le cas d'une fibre individuelle constituée de filaments continus agglomérés, cette fibre est bobinée sans solution de continuité mais en formant circonférentiellement sur le mandrin une ligne sinueuse, par exemple sinusoïdale, comme illustré en 14 par la figure 8, où le mandrin est symbolisé en 15 avec son axe de rotation 13 et la tête de bobinage 16.

Une telle dépose suivant une ligne sinusoïdale 14 est facile à réaliser en contraignant la tête 16 à un mouvement alterné dans une direction parallèle à l'axe 13 du mandrin et d'amplitude réglable de part et d'autre de la position normale de bobinage de la fibre F.

On a volontairement exagéré sur la figure 8 l'amplitude de la dépose sinusoïdale de la fibre F sur le mandrin 15. On peut faire varier à la fois l'amplitude des oscillations de la sinusoïde 14 et le pas de cette dernière en fonction de divers paramètres tels que la nature de la fibre , le degré d'inclinaison de l'axe général de la fibre en place sur le mandrin 15 par rapport à l'axe 13, l'amplitude de l'expansion radiale ultérieure du mandrin, le diamètre de la surface locale où est mise en place la fibre, ainsi que le rang ou éloignement par rapport au mandrin de la couche de fibres concernée dans l'empilage de couches concentriques définissant localement l'épaisseur de la paroi de l'objet réalisé, la bielle de la figure 1 par exemple.

Il est à noter que, pour un même angle d'inclinaison de la fibre par rapport à l'axe du mandrin, l'amplitude des ondulations de la sinusoïde 14 sera différente selon le rang de la couche concernée dans l'empilage de couches concentriques. Sur la figure 10a on a représenté un empilage de quatre couches concentriques successives C₁ à C₄ sur un mandrin 15 et la paroi interne 17 du conformateur sur laquelle vont être pressées lesdites couches lors de l'expansion du mandrin. On a représenté par ailleurs en 18 le jeu, de l'ordre de 0,5 à 1 mm, existant entre les couches C₁ à C₄ et le conformateur, lors de la mise en place de ce dernier et avant expansion du mandrin 15.

Sur la figure 10b sont représentées les mêmes couches C₁ à C₄ après expansion du mandrin.

La couche externe C₄ est tassée contre la paroi 17 du conformateur et les autres couches C₁ à C₃ sont tassées contre la couche C₄, toutefois le déplacement en direction du conformateur est d'autant plus important que la couche est plus proche du mandrin.

Par suite, il est nécessaire, pour un même angle d'inclinaison par rapport à l'axe du mandrin des fibres des diverses couches, de bobiner la fibre de la couche C₁ en lui donnant une ondulation plus importante que pour la fibre de la couche C₂. De même, les ondulations de la fibre sur la couche C₂ seront plus importantes que celles de la fibre de la couche C₃ et ainsi de suite.

Il est aisé par le calcul de déterminer les amplitudes d'ondulation des fibres des différentes couches pour qu'en passant de l'état non expansé du mandrin de la figure 10a à l'état expansé de la figure 10b, les fibres circonférentielles perdent toutes leurs ondulations et deviennent purement hélicoïdales à spires jointives. Le bobinage des différentes couches peut être dès lors facilement programmé et piloté par ordinateur.

Il est à noter que, dans le cas, à la mise en place du conformateur sur le mandrin revêtu de fibres, où ledit jeu 18 serait nul ou très faible, on peut réaliser la dernière couche à l'aide de fibres sans ondulations et purement ou sensiblement circonférentielles.

Ce qui est dit précédemment à propos de la partie cylindrique du mandrin s'applique également aux parties (7) correspondant aux zones de raccordement 3 de la bielle, ainsi qu'aux parties du mandrin (6) correspondant aux chapes 2.

Non seulement les fibres bobinées circonférentiellement au mandrin sont mises en place en formant des ondulations, mais également les fibres bobinées sous un angle, par rapport à l'axe du mandrin, inférieur à 90°, plus l'angle s'éloignant de 90° et plus les ondulations étant d'amplitude réduite. Pour un angle de bobinage des fibres inférieur à 45° environ on peut s'abstenir de faire onduler les fibres, la composante, selon l'axe des fibres, de la dilatation radiale du mandrin étant supportable par les fibres.

Les ondulations de la sinusoïde 14 peuvent s'étendre sur tout le pourtour du mandrin ou seulement sur une fraction de tour, comme illustré sur la figure 9a.

Suivant un deuxième mode de mise en oeuvre du procédé de l'invention, toujours dans le cas d'une fibre individuelle F, aucune ondulation n'est donnée à la fibre circonférentielle mais celle-ci est mise en place par tronçons bout à bout ou en recouvrement partiel, comme illustré par les figure 9b à 9e.

Sur la figure 9b, on a représenté un tour de mandrin couvert par quatre tronçons de fibre d'un quart de cercle bout à bout, respectivement T1 à T4. La spire adjacente suivante sur le mandrin sera constituée de la même manière , mais il est préférable d'observer un décalage au niveau des intervalles 19 afin qu'ils ne soient pas alignés sur des génératrices du cylindre du volume bobiné. De même, d'une couche à la couche concentrique suivante, on s'arrangera pour que les intervalles 19 des couches ne se superposent pas.

Sur la figure 9c, on a représenté deux tronçons bout à bout T'1, T'2, d'une demi-circonférence chacun et deux tronçons d'une spire adjacente T''1,T''2, identiques mais décalés angulairement par exemple d'un quart de tour pour éviter les alignements des intervalles 19. Une même disposition est recommandée pour la couche concentrique supérieure dont les deux tronçons (non représentés) seront à cheval sur ceux de la couche du dessous.

Sur la figure 9d les tronçons d'une spire complète (T'''1, T'''2,...T'''7) sont à recouvrement partiel mutuel. Dans la couche suivante, on respectera le même chevauchement mais avec un décalage pour une meilleure répartition des différences d'épaisseur en passant d'un tronçon au suivant.

Sur la figure 9e, un seul tronçon T''''1 de fibre s'étend sur un arc de cercle supérieur à 360°, le tronçon suivant T''''2 étant mis bout à bout et présentant une même longueur que le premier.

De nombreuse combinaisons de dispositions de tronçons de fibres sont possibles et peuvent être réalisées automatiquement par une tête de dépose au contact à sectionnement de fibre, pilotée par ordinateur. Pour mettre en place de telles fibres, on peut utiliser par exemple la machine de bobinage-dépose au contact décrite dans la demande de brevet français susdite N° 93 06613.

Comme pour les fibres mises en place avec des ondulations, la technique de dépose par tronçons s'applique aux enroulements de fibres circonférentiels ou formant avec l'axe du mandrin un angle important, supérieur à 45° et pouvant justifier d'une telle technique pour absorber les dilatations radiales du mandrin.

La figure 9f illustre le cas de fibres circonférentielles non individuelles mais constituées par exemple des fils de chaîne C d'un morceau de tissu de fibres pré-imprégnées. A cet effet, on découpe des morceaux de tissu, trois par exemple comme illustré en M1,M2 et M3, de dimensions appropriées et qui sont placés par drapage sur le mandrin 15 bout à bout et en sorte que lesdits fils de chaînes C soient disposés circonférentiellement au mandrin. Ainsi, les fils de chaîne C des trois morceaux M1 à M3 sensiblement bout à bout sur tout le pourtour du mandrin, se comporteront comme les tronçons bout à bout T1 à T4 des fibres individuelles de la figure 9b et absorberont la dilatation de diamètre du mandrin 15, alors que les fils de trame T y seront insensibles.

Les morceaux M1 à M3 peuvent ainsi être à recouvrement mutuel partiel comme les tronçons de la figure 9d ou selon le schéma de la figure 9c.

Les morceaux de tissu M1 à M3 sont dimensionnés et configurés en fonction des formes locales du mandrin 15 sur lesquelles ils doivent s'appliquer.

Les fibres peuvent aussi être non individuelles et constituant un tissu dit unidirectionnel, c'est-à-dire formé de fibres unidirectionnelles agglomérées.

Un tel tissu peut être découpé aux formes et dimensions appropriées, comme les morceaux M₁ à M₃ ci-dessus, et mis en place par drapage sur le mandrin aux endroits désirés, en disposant les fibres circonférentiellement ou suivant tout autre angle d'inclinaison par rapport à l'axe du mandrin.

On peut également utiliser des fibres du type "fil de laine" dont la constitution autorise un bobinage et/ou une dépose au contact ordinaire, c'est-à-dire sans ondulations ni tronçonnage, du fait qu'à la dilatation du mandrin, les filaments individuels de relativement courte longueur constituant la mèche de fils pourront glisser d'une certaine mesure les uns par rapport aux autres dans le sens de leur axe.

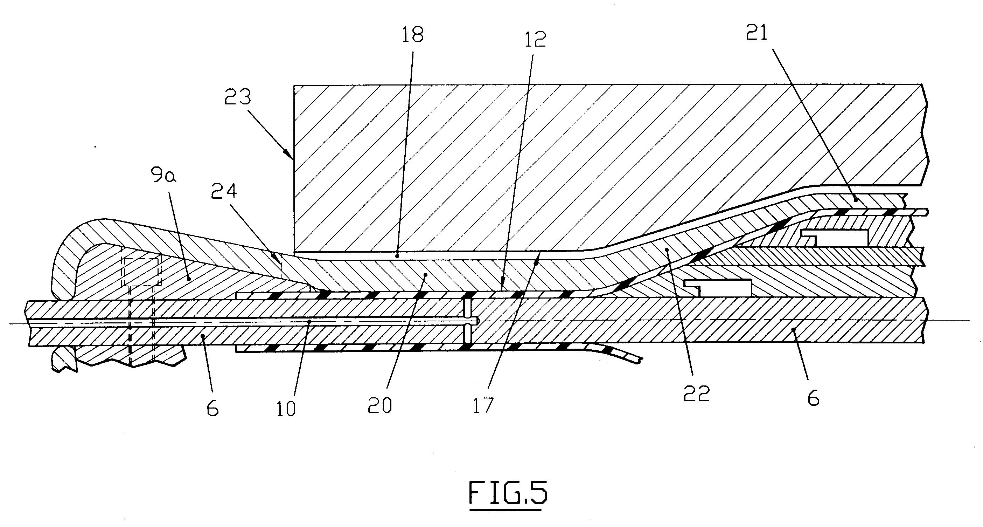

Sur la figure 5, on a représenté le mandrin de la figure 2 revêtu de fibres constituant une paroi de bielle d'épaisseur évolutive plus importante en 20, au droit des futures chapes 2, qu'en 21, au droit de la future partie courante 1, la partie de raccordement 22 présentant une épaisseur décroissante depuis la zone des chapes (20) jusqu'à celle (21) de la partie courante.

Selon les zones (20,21,22), les fibres sont mises en place par bobinage ou dépose au contact ou par drapage de pièces de tissu, en sorte de réaliser les épaisseurs désirées et de répondre aux spécifications techniques. Dans toutes ces zones 20 à 22, toute fibre disposée circonférentiellement sur le mandrin ou avec un angle important par rapport à l'axe 13 sera mise en place conformément au procédé de l'invention.

Une fois les fibres mises en place, un moule de conformation en deux demi-parties symétriques 23 entoure complètement les parties 20 à 22 (figure 5) , la paroi interne 17 étant de préférence revêtue d'un film protecteur ou d'une couche d'un agent de démoulage.

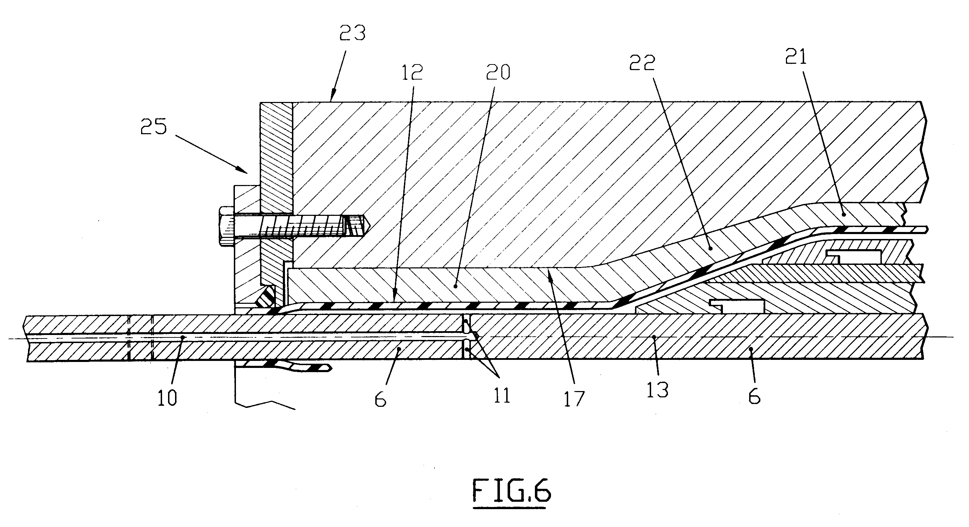

La zone des fibres bobinées autour des poires d'extrémité (9a,9b) est sectionnée en 24 et retirée ainsi que les coques 9a,9b pour mettre en place (figure 6) les flasques d'étanchéité 25 sur le conformateur 23.

La vessie 12 est ainsi pincée de manière étanche entre la barre 6 et les flasques 25, ce qui permet alors d'envoyer de l'air sous pression par les canaux 10,11 dans l'intervalle entre le mandrin et la vessie 12.

Le gonflage de la vessie 12 plaque les couches de fibres (20 à 22) contre la paroi interne 17 du conformateur 23, le gonflage étant effectué après avoir porté la température du matériau composite aux environs de 80°C pour ramollir la résine.

La pression de l'air envoyé dans la vessie 12 est progressive et peut atteindre quelques bars. Elle s'opère tout en portant le matériau composite à une température de l'ordre de 160°C, dépendant de la nature de la résine.

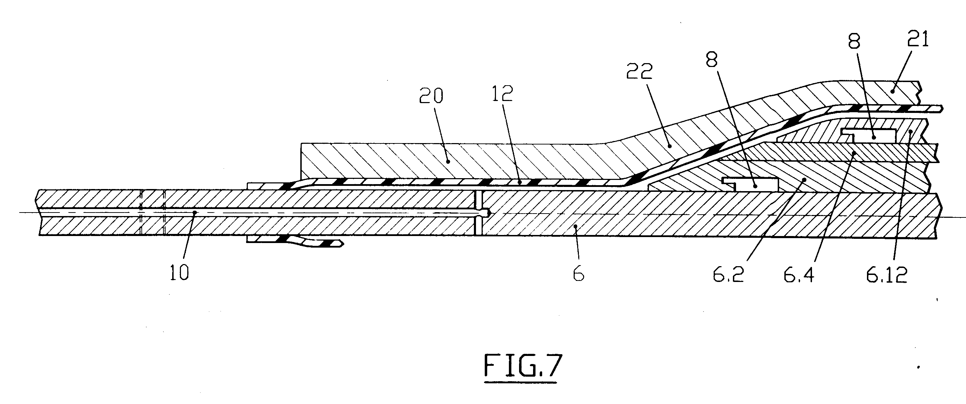

Lorsque le cycle de polymérisation est achevé, les flasques 25 et le conformateur 23 sont enlevés (figure 7), puis l'extraction des parties de mandrin (6,6₂ à 6₁₅) est effectuée, en respectant par exemple l'ordre illustré en figure 4.

D'abord la barre 6 est retirée, ce qui permet aux pièces 6₂, 6₃ d'être décalées dans l'espace précédemment occupé par la barre 6 et retirées de la même manière. Toutes les pièces passent ainsi dans le tunnel de section rectangulaire de l'une des parties 20 d'extrémité de l'ensemble composite monolithique.

Une fois toutes les pièces retirées, la vessie 12 peut être extraite, toujours de la même façon et éventuellement réutilisée.

On peut procéder ensuite à l'usinage aux dimensions des chapes 2 de la bielle dans les parties 20 et aux finitions telles que surfaçage, alésage des trous 5, contrôle, peinture, etc...

La polymérisation est réalisée par étuvage mais pourrait être éventuellement effectuée par un autre moyen, tel que ionisation.

La bielle ainsi réalisée présente en particulier un état de surface remarquable du fait du tassage de la couche externe de fibres contre la face interne du conformateur 23. De plus, le compactage de la masse composite monolithique de la bielle est excellent.

Bien entendu, la bielle pourra présenter des caractéristiques de bobinage ou dépose au contact des fibres comme décrit dans la demande de brevet français N° 93 06614 déposée le 26 mai 1993 au nom de la Demanderesse, par exemple variation, sur une même couche de fibres, de l'angle d'inclinaison de la fibre selon la zone de la bielle, film de colle ou couche de tissu de verre intercalaire, nombre de couches de fibres différent selon la zone de la bielle, éléments de renfort local formés de morceaux de tissu drapés, etc...

Le procédé de l'invention s'applique à la réalisation par bobinage et/ou dépose au contact de tout corps creux, de révolution ou non, présentant ou non un axe, centré ou excentré, pourvu que ledit objet comporte au moins une ouverture permettant la mise en place et l'extraction d'un mandrin. On peut par exemple réaliser ainsi des réservoirs ou bouteilles sphériques ou cylindriques à fond bombé, ou des bielles creuses comportant une chape à une extrémité et une tête simple aplatie à l'autre extrémité.

On peut également réaliser des objets creux à parois planes, par exemple des boîtes ou enceintes à section carrée ou rectangulaire ou polygonale.

Il est enfin possible d'utiliser un mandrin extractible d'une autre manière, sans atteinte de l'intégrité de l'objet composite réalisé et permettant le gonflage de la vessie, par exemple un mandrin en un matériau fusible, notamment un mélange de sable et de liant tel que le matériau dénommé commercialement "arényl" et décrit dans la demande de brevet français N° 93 06614 susdite.

Le procédé de l'invention permet une mécanisation de la fabrication industrielle assurant une très bonne reproduction.

Enfin,l'invention n'est pas limitée aux modes de mise en oeuvre du procédé et aux exemples de réalisation décrits ci-dessus, mais en couvre au contraire toutes les variantes, notamment en ce qui concerne la nature des fibres pré-imprégnées, les caractéristiques constitutives de l'objet composite réalisé (nombre de couches de fibres, nature et épaisseur des couches, caractéristiques de bobinage/dépose au contact/drapage des fibres ou tissus, films intermédiaires de colle), ainsi que les formes et dimensions de l'objet creux composite qui peut être ouvert à une seule extrémité ou à deux extrémités opposées.

## Revendications

1. Procédé de réalisation d'objets creux en matériau composite munis d'au moins un orifice d'accès, ledit procédé comprenant notamment les étapes de :
• bobinage et/ou dépose au contact de fibres pré-imprégnées sur un mandrin expansible, extractible, récupérable ou non (6, 12 ; 15), lesdites fibres étant formées de faisceaux de filaments continus agglomérés ou discontinus enchevêtrés et étant individuelles ou constituant l'un des éléments d'une trame tissée ;
• mise en expansion du mandrin à l'intérieur d'un conformateur approprié (23) au moment de la polymérisation du matériau composite ;
ledit procédé étant caractérisé en ce que les fibres sont bobinées et/ou déposées au contact en formant avec l'axe (13) du mandrin (6, 12 ; 15) un angle approprié pouvant approcher ou atteindre 90° pour les fibres dites circonférentielles, au moins celles-ci formant sur le mandrin une ligne sinueuse (14) ou formée d'éléments discontinus (T1 à T4), chacun non supérieur à un tour complet du mandrin après expansion de ce dernier quand les fibres constituent l'un des éléments d'une trame tissée, de manière à permettre l'expansion circonférentiellement desdites fibres lors de l'expansion radiale du mandrin.

2. Procédé suivant la revendication 1, caractérisé en ce que les fibres (F) sont individuelles et bobinées en sorte de former circonférentiellement ou sensiblement circonférentiellement au mandrin (6,12;15), à l'endroit du contact avec ce dernier, une ligne sinueuse, notamment une sinusoïde (14).

3. Procédé suivant la revendication 2, caractérisé en ce que le bobinage est réalisé avec une tête (16) animée d'un mouvement alterné dans une direction parallèle à l'axe (13) du mandrin (6,12 ; 15).

4. Procédé suivant la revendication 2 ou 3, caractérisé en ce que les ondulations (14) des fibres mises en place sur le mandrin (6,12 ; 15) s'étendent sur un nombre entier de tours, ou une fraction de tour, dudit mandrin.

5. Procédé suivant l'une des revendications 2 à 4, caractérisé en ce que l'amplitude et éventuellement le pas des ondulations (14) des fibres sont variables d'une couche de fibres à la suivante.

6. Procédé suivant la revendications 5, caractérisé en ce que lesdites variations se font dans le sens d'une réduction progressive de l'amplitude desdites ondulations (14) au fur et à mesure que l'on se rapproche de la couche externe.

7. Procédé suivant la revendication 6, caractérisé en ce que, dans le cas de l'existence d'un jeu (18) nul ou très faible entre le conformateur (23) et le mandrin (6,12;15) revêtu de fibres, avant sa mise en expansion, la couche externe est formée de fibres sans ondulations et purement ou sensiblement circonférentielles.

8. Procédé suivant l'une des revendications 2 à 6, caractérisé en ce que l'amplitude et éventuellement le pas des ondulations (14) des fibres sont variables en fonction de l'angle d'inclinaison par rapport à l'axe (13) du mandrin.

9. Procédé suivant l'une des revendications 2 à 6, caractérisé en ce que l'amplitude et éventuellement le pas des ondulations (14) des fibres sont, pour un même angle d'inclinaison des fibres par rapport à l'axe du mandrin, variables en fonction de la distance à l'axe (13) du mandrin de la surface locale où sont placées lesdites fibres.

10. Procédé suivant la revendication 1, caractérisé en ce que les fibres (F) sont individuelles et formées de mèches constituées de filaments enchevêtrés de longueur relativement courte, mises en place par bobinage ou dépose au contact, circonférentiellement ou non, lesdits éléments discontinus constitutifs de ladite ligne étant formés par lesdits filaments des mèches.

11. Procédé suivant la revendication 1, caractérisé en ce que les fibres (F) sont individuelles et mises en place par bobinage ou dépose au contact par tronçons, par sectionnement des fibres au fur et à mesure du placement, suivant des longueurs de tronçons (T1 à T4 ; T'1, T'2 ; T''1, T''2 ; T'''A à T'''7 ; T''''1, T''''2) s'étendant sur une fraction de tour du mandrin (6,12 ; 15), un tour complet ou un peu plus d'un tour.

12. Procédé suivant la revendication 11, caractérisé en ce que lesdits tronçons (T1 à T4 ; T'1, T'2 ; T''1, T''2) sont bout à bout.

13. Procédé suivant la revendication 11, caractérisé en ce que lesdits tronçons (T'''1 à T'''7) se chevauchent mutuellement dans le sens de leur longueur.

14. Procédé suivant la revendication 12 ou 13, caractérisé en ce que d'un enroulement autour du mandrin (6,12;15) au suivant, et/ou d'une couche de fibres à la suivante (C1 à C4), lesdits tronçons sont décalés angulairement, en sorte de répartir dans la masse du produit composite obtenu les intervalles (19) séparant deux tronçons bout à bout ou les différences d'épaisseur dues aux recouvrements mutuels.

15. Procédé suivant la revendication 1, caractérisé en ce que les fibres sont des fils de chaîne (C) ou de trame (T) d'un tissu, et en ce que l'on découpe des morceaux de tissu (M1 à M3) aux dimensions et formes appropriées et on drape lesdits morceaux sur le mandrin (6,12 ; 15) de manière que les fils de chaîne (C), ou de trame (T), soient disposés circonférentiellement ou sensiblement circonférentiellement audit mandrin.

16. Procédé suivant la revendication 1, caractérisé en ce que les fibres sont des fibres d'un tissu dit unidirectionnel, découpé aux dimensions et formes appropriées et drapé sur le mandrin (6,12;15) de manière que lesdites fibres soient disposées circonférentiellement ou sensiblement circonféreniellement audit mandrin.

17. Procédé suivant la revendication 15 ou 16, caractérisé en ce que lesdits morceaux de tissu (M1 à M3) s'étendent sur un tour complet du mandrin (6,12;15) avec chevauchement mutuel partiel ou placement bout à bout.

18. Procédé suivant l'une des revendications 1 à 17, caractérisé en ce que le mandrin expansible, extractible, récupérable ou non, est formé par l'assemblage démontable, à la manière d'un puzzle en trois dimensions, de pièces (6, 6₂ à 6₁₅) dont les formes et dimensions sont déterminées en sorte de permettre, après polymérisation, l'extraction par enlèvement, selon une séquence pré-établie, des pièces par passage suivant l'orifice , ou l'un des orifices, d'accès à l'objet creux à réaliser, un tel mandrin étant revêtu d'une vessie gonflable (12) sur laquelle seront mises en place les fibres.

## Claims

1. Method of producing hollow objects made from composite material, provided with at least one access orifice, the said method comprising in particular the steps of:
• winding and/or depositing in contact preimpregnated fibres on an expandable extractable mandrel (6, 12; 15), recoverable or non-recoverable, the said fibres being formed by bundles of agglomerated continuous or interlocking discontinuous filaments and being individual or constituting one of the elements of a woven mesh;
• expanding the mandrel within a suitable jig (23) at the time of polymerisation of the composite material;
the said method being characterised in that the fibres are wound and/or deposited in contact whilst forming, with the axis (13) of the mandrel (6, 12; 15), a suitable angle which may approach or reach 90° for the so-called circumferential fibres, at least the latter forming on the mandrel a sinuous line (14) or one formed by discontinuous elements (T1 to T4), each not greater than a complete turn of the mandrel after expansion of the latter when the fibres constitute one of the elements of a woven mesh, so as to allow the expansion of the said fibres circumferentially when the mandrel expands radially.

2. Method according to Claim 1, characterised in that the fibres (F) are individual and wound so as to form circumferentially or substantially circumferentially to the mandrel (6, 12; 15), at the point of contact therewith, a sinuous line, notably a sinusoid (14).

3. Method according to Claim 2, characterised in that the winding is carried out with a head (16) driven in an alternating movement in a direction parallel to the axis (13) of the mandrel (6, 12; 15).

4. Method according to Claim 2 or 3, characterised in that the undulations (14) of the fibres put on the mandrel (6, 12; 15) extend over an integral number of turns, or a fraction of a turn, of the said mandrel.

5. Method according to one of Claims 2 to 4, characterised in that the magnitude and optionally the pitch of the undulations (14) of the fibres are variable from one layer of fibres to the following.

6. Method according to Claim 5, characterised in that the said variations take place in the sense of a progressive reduction of the magnitude of the said undulations (14) as the external layer is approached.

7. Method according to Claim 6, characterised in that, in the case of the existence of a nil or very small clearance (18) between the jig (23) and the mandrel (6, 12; 15) covered with fibres, before it is expanded, the external layer is formed from fibres without undulations and purely or substantially circumferential.

8. Method according to one of Claims 2 to 6, characterised in that the magnitude and optionally the pitch of the undulations (14) of the fibres are variable according to the angle of inclination with respect to the axis (13) of the mandrel.

9. Method according to one of Claims 2 to 6, characterised in that the magnitude and optionally the pitch of the undulations (14) of the fibres are, for the same angle of inclination of the fibres with respect to the axis of the mandrel, variable according to the distance to the axis (13) of the mandrel from the local surface where the said fibres are placed.

10. Method according to Claim 1, characterised in that the fibres (F) are individual and formed by strands consisting of interlocking filaments of relatively short length, put in place by winding or deposited in contact, circumferentially or not, the said discontinuous elements constituting the said line being formed by the said filaments of the strands.

11. Method according to Claim 1, characterised in that the fibres (F) are individual and put in place by winding or deposited in contact in sections, by cutting the fibres as they are positioned, according to lengths of sections (T1 to T4; T'1, T'2; T''1, T''2; T'''1 to T'''7; T''''1, T''''2) extending over a fraction of a turn of the mandrel (6, 12; 15), a complete turn or a little more than a turn.

12. Method according to Claim 11, characterised in that the said sections (T1 to T4; T'1, T'2; T''1, T''2) are end to end.

13. Method according to Claim 11, characterised in that the said sections (T'''1 to T'''7) overlap mutually in the direction of their length.

14. Method according to Claim 12 or 13, characterised in that, from one winding around the mandrel (6, 12; 15) to the following, and/or from one layer of fibres to the following (C1 to C4), the said sections are offset angularly, so as to distribute, in the mass of the composite product obtained, the intervals (19) separating two sections end to end or the differences in thicknesses due to the mutual overlaps.

15. Method according to Claim 1, characterised in that the fibres are warp (C) or weft (T) threads of a cloth, and in that pieces of cloth (M1 to M3) are cut to the appropriate dimensions and shapes and the said pieces are draped on the mandrel (6, 12; 15) so that the warp (C) or weft (T) threads are disposed circumferentially or substantially circumferentially to the said mandrel.

16. Method according to Claim 1, characterised in that the fibres are fibres of a so-called unidirectional cloth, cut to the appropriate dimensions and shapes and draped on the mandrel (6, 12; 15) so that the said fibres are disposed circumferentially or substantially circumferentially to the said mandrel.

17. Method according to Claim 15 or 16, characterised in that the said pieces of cloth (M1 to M3) extend over a complete turn of the mandrel (6, 12; 15) with partial mutual overlap or placing end to end.

18. Method according to one of Claims 1 to 17, characterised in that the expandable extractable mandrel, recoverable or non-recoverable, is formed by the demountable assembly, like a three-dimensional puzzle, of pieces (6, 6₂ to 6₁₅) whose shapes and dimensions are determined so as to allow, after polymerisation, the extraction of the pieces by removing them, in a pre-established sequence, by passing them through the orifice, or one of the orifices, giving access to the hollow object to the produced, such a mandrel being covered with an inflatable bladder (12) on which the fibres will be placed.

## Patentansprüche

1. Verfahren zur Herstellung von Hohlkörpern aus Verbundwerkstoff, die mit Wenigstens einer Zutrittsöffnung versehen sind, wobei das Verfahren namentlich die Schritte
- Wickeln und/oder In-Eingriff-Bringen von vorimprägnierten Fäden auf einen expandierbaren, herausziehbaren, gegebenenfalls wiederverwendbaren Dorn (6, 12; 15), wobei die Fäden aus agglomerierten kontinuierlichen oder diskontinuierlichen gefitzten Filamenten gebildet und individuell sind oder eines der Elemente eines Stoffgarns bilden;
- Expandieren des Dorns im Inneren einer geeigneten Schrumpfvorrichtung (23) im Moment der Polymerisation des Verbundwerkstoffs;
wobei das Verfahren dadurch gekennzeichnet ist, daß die Fäden gewickelt und/oder in Eingriff gebracht werden, indem mit der Achse (13) des Dorns (6, 12; 15) ein geeigneter Winkel, der sich 90° annähern oder erreichen kann, für wenigstens diejenigen Umfangsfäden gebildet wird, die auf dem Dorn eine geschlängelte Linie (14) bilden oder aus diskontinuierlichen Elementen (T1 bis T4) gebildet sind, die jeweils nicht größer als ein vollständiger Umlauf des Dorns nach Expansion dieses letzteren sind, wenn die Fäden eines der Elemente eines Stoffgarns bilden, und zwar derart, daß die umfängliche Expansion der Fäden während der radialen Expansion des Dorns ermöglicht wird.

2. Verfahren nach Anspruch 1, dadurch gekennzeichnet, daß die Fäden (F) individuell sind und derart gewickelt werden, daß sie in Umfangsrichtung oder im wesentlichen in Umfangsrichtung des Dorns (6, 12; 15) an der Berührungsstelle mit diesem letzteren eine geschlängelte Linie, insbesondere eine Sinuskurve (14) bilden.

3. Verfahren nach Anspruch 2, dadurch gekennzeichnet, daß das Wickeln mit einem Kopf (16) realisiert wird, der zu einer wechselnden Bewegung in einer Richtung parallel zur Achse (13) des Dorns (6, 12; 15) veranlaßt wird.

4. Verfahren nach Anspruch 2 oder 3, dadurch gekennzeichnet, daß die Wellungen (14) der auf dem Dorn (6, 12; 15) angeordneten Fäden sich über eine ganze Anzahl von Umläufen oder einen Teilumlauf des Dorns erstrecken.

5. Verfahren nach einem der Ansprüche 2 bis 4, dadurch gekennzeichnet, daß die Amplitude und gegebenenfalls die Steighöhe der Wellungen (14) der Fäden von einer Fadenschicht zur nachfolgenden variabel sind.

6. Verfahren nach Anspruch 5, dadurch gekennzeichnet, daß die Änderungen in dem Sinn einer fortschreitenden Reduktion der Amplitude der Wellungen (14) vorgenommen werden, je weiter man sich der Außenschicht nähert.

7. Verfahren nach Anspruch 6, dadurch gekennzeichnet, daß im Fall der Existenz eines sehr geringen oder keines Spiels (18) zwischen der Schrumpfvorrichtung (23) und dem mit Fäden bedeckten Dorn (6, 12; 15) vor seinem Expandieren die Außenschicht aus Fäden ohne Wellungen und ausschließlich oder im wesentlichen in Umfangsrichtung sich erstreckend gebildet wird.

8. Verfahren nach einem der Ansprüche 2 bis 6, dadurch gekennzeichnet, daß die Amplitude und gegebenenfalls die Wellungshöhe (14) der Fäden als Funktion des Neigungswinkels in bezug auf die Achse (13) des Dorns variabel sind.

9. Verfahren nach einem der Ansprüche 2 bis 6, dadurch gekennzeichnet, daß die Amplitude und gegebenenfalls die Wellungshöhe (14) der Fäden für einen gleichen Neigungswinkel der Fäden in bezug zur Achse des Dorns als Funktion des Abstandes der Achse (13) des Dorns von der lokalen Oberfläche, wo die Fäden angeordnet werden, variabel sind.

10. Verfahren nach Anspruch 1, dadurch gekennzeichnet, daß die Fäden (F) individuell und aus Vorgarn gebildet sind, das aus gefitzten Filamenten relativ kurzer Länge gebildet ist, die durch gegebenenfalls umfängliches Wickeln oder In-Eingriff-Bringen aufgebracht sind, wobei die diskontinuierlichen, die Linie bildenden Elemente durch die Vorgarn-Filamente gebildet werden.

11. Verfahren nach Anspruch 1, dadurch gekennzeichnet, daß die Fäden (F) individuell und durch Wickeln oder In-Eingriff-Bringen von Teilstücken durch Zerstückelung von Fäden zur Anordnung entsprechend der Länge von Teilstücken (T1 bis T4; T'1, T'2; T''1, T''2; T'''1 bis T'''7; T''''1, T''''2) angebracht sind, die sich über einen Teil des Umfangs des Dorns (6, 12; 15), einen kompletten Umfang oder etwas mehr als ein Umfang erstrecken.

12. Verfahren nach Anspruch 11, dadurch gekennzeichnet, daß die Teilstücke (T1 bis T4; T'1, T'2; T''1, T''2) endseitig aneinander stoßend sind.

13. Verfahren nach Anspruch 11, dadurch gekennzeichnet, daß die Teilstücke (T'''1 bis T'''7) in Richtung ihrer Länge wechselseitig übereinander liegen.

14. Verfahren nach Anspruch 12 oder 13, dadurch gekennzeichnet, daß von einer Umwickelung des Dorns (6, 12; 15) zur folgenden und/oder einer Schicht von Fäden zur folgenden (C1 bis C4) die Teilstücke winkelförmig derart versetzt sind, daß in der Masse des erhaltenen Verbundwerkstoffs Zwischenräume (19), die zwei endseitig aneinander stoßende Teilstücke trennen, oder Dickenunterschiede aufgrund von gegenseitigen Überdeckungen verteilt sind.

15. Verfahren nach Anspruch 1, dadurch gekennzeichnet, daß die Fäden Kettfäden (C) oder Schußfäden (T) eines Gewebes sind und daß man Gewebestücke (M1 bis M3) auf geeignete Abmessungen und Formen schneidet und die Stücke auf dem Dorn (6, 12; 15) derart anordnet, daß die Kettfäden (C) oder Schußfäden (T) in Umfangsrichtung oder im wesentlichen in Umfangsrichtung zum Dorn angeordnet sind.

16. Verfahren nach Anspruch 1, dadurch gekennzeichnet, daß die Fäden Fäden einer Wirkware sind, die auf geeignete Abmessungen und Formen geschnitten und auf dem Dorn (6, 12; 15) derart angeordnet werden, daß die Fäden in Umfangsrichtung oder im wesentlichen in Umfangsrichtung des Dorns angeordnet sind.

17. Verfahren nach Anspruch 15 oder 16, dadurch gekennzeichnet, daß die Stoffstücke (M1 bis M3) sich über einen vollständigen Umlauf des Dorns (6, 12; 15) mit teilweiser Überdeckung oder unter endseitigem Aneinanderstoßen erstrecken.

18. Verfahren nach einem der Ansprüche 1 bis 17, dadurch gekennzeichnet, daß der gegebenenfalls wiederverwendbare, expandierbare und zurückziehbare Dorn durch eine zerlegbare Anordnung in Form eines dreidimensionalen Puzzles aus Teilen (6, 6₂ bis 6₁₅) gebildet wird, deren Formen und Abmessungen derart bestimmt sind, daß nach Polymerisation das Herausnehmen durch Anheben der Teile in einer vorbestimmten Folge durch Hindurchführen durch die Zutrittsöffnung oder eine von mehreren Zutrittsöffnungen des herzustellenden Hohlkörpers ermöglicht wird, wobei ein derartiger Dorn mit einem aufblasbaren Balg (12) bedeckt ist, auf dem die Fäden angeordnet werden.
